# EUROPEAN PATENT SPECIFICATION

(11) **EP 2 319 981 B1**
(45) Date of publication and mention of the grant of the patent: **29.02.2012**
(21) Application number: 09306083.8
(22) Date of filing: 10.11.2009
(51) Int. Cl.: D06P 1/651, B29D 11/00, C08J 7/06, G02B 1/04, G02C 7/04

(54) **Method for dyeing a plastic substrate of high refractive index**
Verfahren zum Färben eines Kunststoffsubstrats mit hohem Brechungsindex
Procédé de teinture d'un substrat en plastique à indice de réfraction élevé

(43) Date of publication of application: 11.05.2011
(73) Proprietor: ESSILOR INTERNATIONAL (Compagnie Générale d'Optique), 94220 Charenton le Pont (FR)
(72) Inventor: Liu, Yu, 94220, CHARENTON-LE-PONT (FR); Song, Lixin, 94220, CHARENTON-LE-PONT (FR); Lim, Yaw Chuan, 94220 CHARENTON-LE-PONT (FR); Wang, Likui, 94220, CHARENTON-LE-PONT (FR)
(74) Representative: Salou, Clarisse

(56) References cited:
- EP-A2- 0 921 417

## Description

The present invention pertains to a method for dyeing substrates to obtain tinted substrates or articles, for example tinted optical or ophthalmic lenses. The invention particularly concerns articles obtained from substrates prepared by curing a polymerizable composition comprising at least one monomer containing at least one episulfide group and optionally at least one thiol group.

The polymerization of said monomer leads to a polymer comprising at least one thioether group.

Substrate prepared by curing a polymerizable composition comprising at least one monomer containing at least one episulfide group, is herein after called "substrate of high refractive index comprising a thioether group".

Tinting / colouring an ophthalmic lens is an increasing need. However, substrates of high refractive index comprising a thioether group are difficult to tint with conventional processes such as conventional bath direct tinting. Water bath dyeing is not suitable because of its limited dye absorption amount, even during prolonged time.

Therefore there is a need for a process for tinting substrates of high refractive index comprising a thioether group, overcoming the limitations of the known processes, without compromising the tinting homogeneity.

EP-A-921 417 discloses optical materials prepared from epoxy/episulfide resin compositions which are dyed by immersing them in dye compositions comprising dyestuffs and a carrier.

Advantageously the present invention discloses a method that addresses the issues discussed above.

The invention provides a solution for tinting substrates of high refractive index comprising a thioether group in a short time and achieving a higher tinting intensity with good uniformity. These and other advantages are achieved in accordance with the present invention as described below.

The invention discloses a method for dyeing a substrate prepared by curing a polymerizable composition comprising at least one monomer containing at least one episulfide group and optionally at least one thiol group, said method comprising the following successive steps:
- providing a dye solution comprising at least one dye, or dye precursor, and at least one carrier in at least one solvent, the carrier being chosen from the compounds represented by the following formulae (1) and (2): 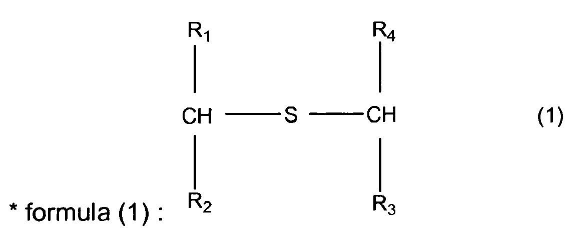 wherein R₁, R₂, R₃ and R₄ are each selected from the group consisting of the following radicals: alkyl having from 1 to 10 carbon atom, H, -CH₂SH, -CH₂SCH₂CH₂SH, 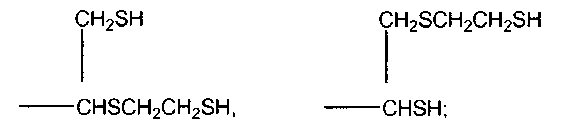 provided that R₁, R₂, R₃ and R₄ are not H or an alkyl simultaneously, or that if any three of R₁, R₂, R₃ and R₄ are H or an alkyl, the other radical consists of one of the following radicals: 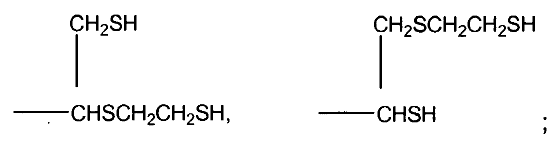 and

   * formula (2) ; (HSCH₂)₄₋ₘC(CH₂SCH₂CH₂SH)ₘ (2)

   wherein m denotes an integer from 1 to 3;
   And
- at least partially immersing the substrate in the dye solution for a time sufficient to allow the effective tinting of the substrate.

According to the invention, the immersion step can be carried out once, or can be repeated several times, in order to manufacture a tinted substrate of higher intensity. This step can be carried out by the use of a dyeing apparatus, in which the substrate is moved in the dye solution according to scheduled sequences.

The substrate can be immersed totally, or partially. If the substrate is immersed partially, generally only the immersed part of the substrate is tinted.

The substrate can be a commercially available product, or it can be manufactured just before the tinting.

The substrate has generally the shape of an article.

The method according to the invention is rapid, reproducible and easy to carry out. Moreover the tinting of the part of the substrate which is immersed is substantially uniform.

In addition, this method allows the production of the whole range of coloration, from the lightest colour to the darkest colour.

Substrate, in the sense of the present invention, should be understood to mean an uncoated substrate. The substrate may in particular be an optically transparent material having the shape of an optical article.

According to a preferred embodiment, the substrate has a refractive index of at least 1.67, preferably from 1.67 to 1.79 and more preferably from 1.71 to 1.79.

The monomer containing at least one episulfide group and optionally at least one thiol group according to the invention contains episulfide group(s), or episulfide group(s) and thiol group(s).

In a preferred embodiment, the monomer does not comprise any other functional group than episulfide group(s) (and optionally thiol group(s)).

Preferably the episulfide group has the structure of formula (3): 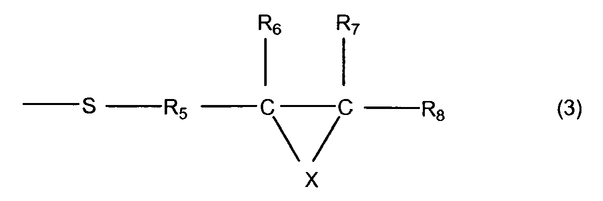 wherein R₅ represents a hydrocarbon group having 1 to 10 carbon atoms, R₆, R₇ and R₈ each represents a hydrogen atom or a hydrocarbon group having 1 to 10 carbon atoms, X represents S or O with the proviso that, in the molecule, the average number of S represented by X is about 50% of the total number of S and O in the three-member ring,
and more preferably X is S.

Preferably, the episulfide group has the structure of formula (4): 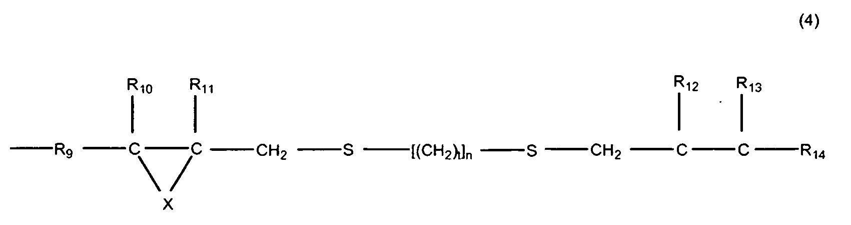 wherein R₉, R₁₀, R₁₁, R₁₂, R₁₃ and R₁₄ each represents a hydrogen atom or a hydrocarbon group having 1 to 10 carbon atoms, X represents S or O with the proviso that, in the molecule, the average number of S represented by X is about 50% of the total number of S and O in the three-member ring, m represents an integer from 0 to 6 and n represents an integer from 0 to 4,
and more preferably X is S.

Preferably, the polymerizable composition further comprises one or more polythiols of formula R'(SH)ₙ, in which n' is an integer from 2 to 6 and R' is an organic group of valency equal to n'.

In a preferred manner the carrier is chosen from the group comprising straight-chain dimercaptan compounds such as bis(2-mercaptoethyl) sulfide, 1,2-[bis(2-mercaptoethylthio)]ethane; branched aliphatic polymercaptan compounds such as 2-mercaptomethyl-1,3-dimercaptopropane, 2-mercaptomethyl-1,4-dimercaptobutane, 2-(2-mercaptoethylthio)1,3-dimercaptopropane, 1,2-bis[(2-mercaptoethylthio)]-3-mercaptopropane, 1,1,1-tris(mercaptomethyl)propane and tetrakismercaptomethylmethane ; 4-mercaptomethyl-3,6-dithia-1,8-octanedithiol and 2-mercaptoethyl sulphide, preferably said carrier being mercaptomethyl-3,6-dithia-1,8-octanedithiol or 2-mercaptoethyl sulphide, and more preferably the carrier being 4-mercaptomethyl-3,6-dithia-1,8-octanedithiol.

Preferably, the solvent is water or an organic solvent, and more preferably the solvent is water.

According to the invention, the dye solution can contain a dye chosen from the group of azo type dyes, quinophtalones type dyes, and anthraquinone type dyes.

However various known dyes mixture or dyes solutions used in dyeing can be used, as known to the one skilled in the art.

The dye solutions which are suitable are commercially available disperse dye solutions, to be combined with at least one carrier according to the invention. For example, the dyes sold as BPI® Molecular Catalytic Tints by Brain Power International are available in more than 180 colours.

In a variant, the dye solution contains 0.05% to 5%, preferably 0.05% to 1 %, and more preferably 0.08 to 0.5% by weight of the carrier.

The amount of the dye is not critical but is ordinarily 0.5 to 30 g/ Liter in terms of concentration in the dye solution.

The dye solution can comprise any other additive known to the one skilled in the art.According to the invention, the dye solution can contain an emulsifier, preferably chosen from the group of amine salts or alkali salts of carboxylic, sulfamic or phosphoric acids, acid salts of amines, ethoxylated or propoxylated alkyl or aryl phenolic compounds.

The optional emulsifier (surfactant) may be used in an amount of 0 to 15 pbw, preferably 0.5 to 5 pbw, more preferably 3 to 4 pbw.

Emulsifiers which may be used include ionic, non-ionic, or mixtures thereof. Typical ionic emulsifiers are anionic, including amine salts or alkali salts of carboxylic, sulfamic or phosphoric acids, for example sodium lauryl sulfate, ammonium lauryl sulfate, lignosulfonic acid salts, ethylene diamine tetra acetic acid (EDTA), sodium salts and acid salts of amines such as laurylamine, hydrochloride or poly(oxy-1,2-ethanediyl), alpha-sulfo-omega-hydroxy ether with phenol 1-(methylphenyl)ethyl derivative ammonium salts ; or amphoteric, that is compounds bearing both anionic and cationic groups, for example lauryl sulfobetaine ; dihydroxy ethylalkyl betaine ; amido betaine based on coconut acids ; disodium N-lauryl amino propionate ; or the sodium salts of dicarboxylic acid coconut derivatives. Typical non-ionic emulsifiers include ethoxylated or propoxylated alkyl or aryl phenolic compounds such as octylphenoxypolyethyleneoxyethanol or poly(oxy-1,2-ethanediyl), alpha-phenyl-omega-hydroxy, styrenated. The preferred emulsifier is a mixture of C₁₄ - C₁₈ and C₁₆ - C₁₈ ethoxylated unsaturated fatty acids and poly(oxy-1,2-ethanediyl), alpha-sulfo-omega-hydroxy ether with phenol 1-(methylphenyl) ethyl derivative ammonium salts and poly(oxy-1,2-ethanediyl), alpha-phenyl-omega-hydroxy, styrenated.

The method of the invention provides tinted substrates in a short time and achieves a higher tinting intensity with good uniformity.

The method of the invention enables tinting substrates to be provided of different luminous transmittance depending mainly on different tinting times and dye solutions of different dye concentration.

Preferably, the length of the immersion is within the range of from 3 to 100 minutes, preferably from 10 to 90 minutes, and more preferably from 30 to 96 minutes.

According to the invention, the method can further comprise the heating of the dye solution at a temperature of from 90 to 100°C, preferably from 90 to 96°C, and more preferably from 93 to 96°C, during the immersion.

The invention will be further illustrated by the following non-limiting examples which are given for illustrative purposes only.

### EXAMPLES

In all the examples, the substrate is a commercially available compound provided by the company Mitsubishi Gas Chemical and sold as having a refractive index n_{D} of 1.74.

This substrate has a density d of 1.45, and was obtained from the chemical curing of 2-mercaptoethyl sulfide 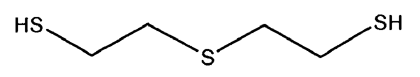 (and metallic sulphur S_{α} 20% by weight),
and 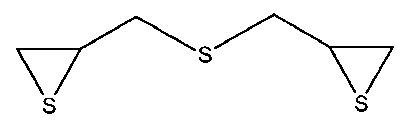 2,3-episulfide propanyl sulfide.

### Example 1

Two compounds, 4-mercaptomethyl-3,6-dithia-1,8-octanedithiol and 2-mercaptoethyl sulfide, were used as a carrier for tinting two substrates, in two different water bath solutions, according to the conditions set forth in the Table below. Substrates as disclosed above were immersed in respective bath. The concentration of the carrier was 0.1 vol. % in each bath solution.

Each water bath solution comprises the carrier and a dye solution (which is a commercially available disperse dye formulation sold as BPI dye solution #46300) diluted in water.

The two tinted substrates so obtained are two ophthalmic lenses according to the invention.

The results of the measurements on said ophthalmic lenses are given in the Table below, in which Tv is the luminous transmittance and Hz is the haze.

| | Tv | Hz | Conditions | Homogeneity of the tinting (visual) |
|---|---|---|---|---|
| 4-mercaptomethyl-3,6-dithia-1,8-octanedithiol | 32.5 | 0.45 | Ambient pressure | Pass |
| | | | 94 °C | |
| | | | 45 min | |
| 2-Mercaptoethyl Sulfide | 3.78 | 0.93 | Ambient pressure | Pass |
| | | | 94 °C | |
| | | | 1 hr | |

Good quality tinting was obtained, and the haze level of the ophthalmic lenses using those two different carriers was acceptable. The effect of 4-mercaptomethyl-3,6-dithia-1,8-octanedithiol was better in terms of haze level .

The haze value of the final ophthalmic lenses was measured by light transmission using the Haze-Guard Plus haze meter from BYK-Gardner (a color difference meter) according to the method of ASTM D1003-00, which is incorporated herein in its entirety by reference. All references to "haze" values in this application are by this standard. The instrument was first calibrated according to the manufacturer's instructions. Next, the sample was placed on the transmission light beam of the pre-calibrated meter and the haze value was recorded from three different specimen locations and averaged. Luminous transmittance (also called "relative light transmission factor in the visible spectrum") Tv (or ζv) is defined in the standard ISO 13666:1998 and is measured according to the standard ISO 8980-3 (from 380 to 780 nm), using the same device.

### Example 2

Four pieces of the substrate disclosed above were tinted into lenses respectively for 15, 30, 45, 60 minutes in four different bath solutions. Each water bath solution comprises the carrier 4-mercaptomethyl-3,6-dithia-1,8-octanedithiol, under 0.1% by volume concentration, and a dye solution (which is a commercially available disperse dye formulation sold as BPI lens dye solution #46300) diluted in water.

The temperature during the immersion was equal to 94°C.

The results of the measurements of the luminous transmittance (T) and of the haze (Hz) on the four substrates respectively on the so obtained four ophthalmic lenses are given in the Table below, before respectively after the tinting.

| Transmission, haze vs Tinting Time | | | | |
|---|---|---|---|---|
| | Before | | After | |
| Time (min) | Tv | Hz | Tv | Hz |
| 0 | | | 87 | |
| 15 | 87.0 | 0.37 | 72.5 | 0.38 |
| 30 | 87.0 | 0.38 | 48.7 | 0.42 |
| 45 | 87.1 | 0.32 | 32.5 | 0.47 |
| 60 | 87.1 | 0.39 | 12.3 | 0.51 |

The transmission of the so obtained ophthalmic lens may reach class 3 after 60 minutes immersion in the bath under 94°C. The haze level does not exhibit significant change before and after tinting.

Good quality tinting was obtained, and the haze level of the ophthalmic lenses was acceptable. This example shows the possibility of varying the luminous transmittance of the ophthalmic lenses by adjusting tinting time.

## Claims

1. Method for dyeing a substrate prepared by curing a polymerizable composition comprising at least one monomer containing at least one episulfide group and optionally at least one thiol group, said method comprising the following successive steps:
- providing a dye solution comprising at least one dye, or dye precursor, and at least one carrier in at least one solvent, the carrier being chosen from the compounds represented by the following formulae (1) and (2): 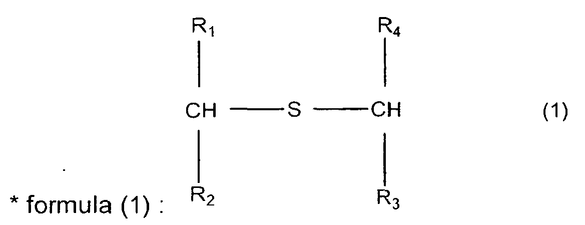 wherein R₁, R₂, R₃ and R₄ are each selected from the group consisting of the following radicals: alkyl having from 1 to 10 carbon atom, H, -CH₂SH, -CH₂SCH₂CH₂SH, 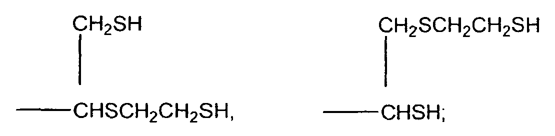 provided that R₁, R₂, R₃ and R₄ are not H or an alkyl simultaneously, or that if any three of R₁, R₂, R₃ and R₄ are H or an alkyl, the other radical consists of one of the following radicals: 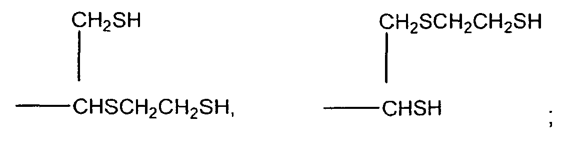 and
* formula (2) : (HSCH₂)₄₋ₘC(CH₂SCH₂CH₂SH)ₘ (2)
wherein m denotes an integer from 1 to 3;
And
- at least partially immersing the substrate in the dye solution for a time sufficient to allow the effective tinting of the substrate.

2. Method according to the preceding claim, wherein the substrate has a refractive index of at least 1.67, preferably from 1.67 to 1.79 and more preferably from 1.71 to 1.79.

3. Method according to any one of the preceding claims, wherein the episulfide group has the structure of formula (3): 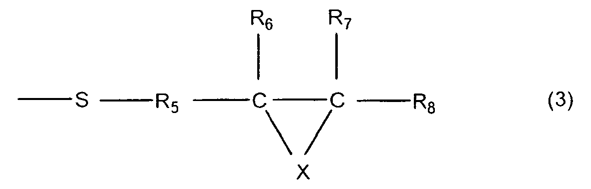 wherein R₅ represents a hydrocarbon group having 1 to 10 carbon atoms, R₆, R₇ and R₈ each represents a hydrogen atom or a hydrocarbon group having 1 to 10 carbon atoms, X represents S or O with the proviso that, in the molecule, the average number of S represented by X is about 50% of the total number of S and O constituting in the three-member ring,
and preferably X is S.

4. Method according to any one of the preceding claims, wherein the episulfide group has the structure of formula (4) : 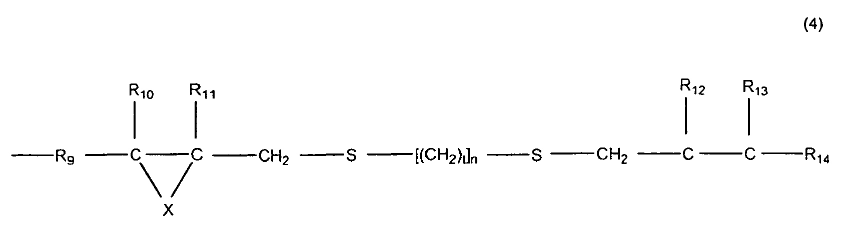 wherein R₉, R₁₀, R₁₁, R₁₂, R₁₃ and R₁₄ each represents a hydrogen atom or a hydrocarbon group having 1 to 10 carbon atoms, X represents S or O with the proviso that, in the molecule, the average number of S represented by X is about 50% of the total number of S and O in the three-member ring, m represents an integer from 0 to 6 and n represents an integer from 0 to 4,
and preferably X is S.

5. Method according to any one of the preceding claims, wherein the polymerizable composition further comprises one or more polythiols of formula R'(SH)ₙ', in which n' is an integer from 2 to 6 and R' is an organic group of valency equal to n'.

6. Method according to any one of the preceding claims, wherein said carrier is chosen from the group comprising straight-chain dimercaptan compounds such as bis(2-mercaptoethyl) sulfide, 1,2-[bis(2-mercaptoethylthio)]ethane; branched aliphatic polymercaptan compounds such as 2-mercaptomethyl-1,3-dimercaptopropane, 2-mercaptomethyl-1,4-dimercaptobutane, 2-(2-mercaptoethylthio)1,3-dimercaptopropane, 1,2-bis[(2-mercaptoethylthio)]-3-mercaptopropane, 1,1,1-tris(mercaptomethyl)propane and tetrakismercaptomethylmethane ; 4-mercaptomethyl-3,6-dithia-1,8-octanedithiol and 2-mercaptoethyl sulphide, preferably said carrier being mercaptomethyl-3,6-dithia-1,8-octanedithiol or 2-mercaptoethyl sulphide, and more preferably the carrier being 4-mercaptomethyl-3,6-dithia-1,8-octanedithiol.

7. Method according to any one of the preceding claims, wherein the solvent is water or an organic solvent, and preferably the solvent is water.

8. Method according to any one of the preceding claims, wherein the dye solution contains a dye chosen from the group of azo type dyes, quinophtalones type dyes, and anthraquinone type dyes.

9. Method according to any one of the preceding claims, wherein the dye solution contains 0.05% to 5%, preferably 0.05% to 1%, and more preferably 0.08 to 0.5% by weight of the carrier.

10. Method according to any one of the preceding claims, wherein the dye solution contains an emulsifier, preferably chosen from the group of amine salts or alkali salts of carboxylic, sulfamic or phosphoric acids, acid salts of amines, ethoxylated or propoxylated alkyl or aryl phenolic compounds.

11. Method according to any one of the preceding claims, wherein the length of the immersion is within the range of from 3 to 100 minutes, preferably from 10 to 90 minutes, and more preferably from 30 to 96 minutes.

12. Method according to any one of the preceding claims, wherein the method further comprises the heating of the dye solution at a temperature of from 90 to 100°C, preferably from 90 to 96°C, and more preferably from 93 to 96°C, during the immersion.

## Patentansprüche

1. Verfahren zum Färben eines Substrats, das durch Aushärten einer polymerisierbaren Zusammensetzung hergestellt wird, welche mindestens ein Monomer umfasst, welches mindestens eine Episulfidgruppe und optional mindestens eine Thiolgruppe enthält, wobei das Verfahren die folgenden aufeinanderfolgenden Schritte umfasst:
- Zur-Verfügung-Stellen einer Farbstofflösung, welche mindestens einen Farbstoff oder Farbstoffvorläufer und mindestens einen Träger in mindestens einem Lösungsmittel umfasst, wobei der Träger aus den Verbindungen, die durch die folgenden Formeln (1) und (2) repräsentiert werden, ausgewählt wird: 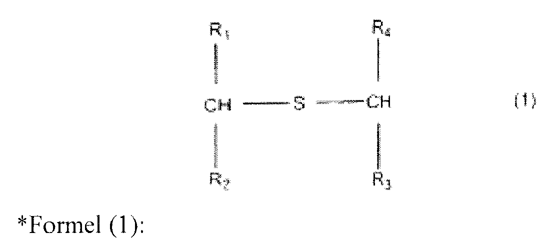 wobei R₁ R₂, R₃ und R₄ jeweils aus der Gruppe, die aus den folgenden Radikalen besteht, ausgewählt werden: Alkyl mit 1 bis 10 Kohlenstoffatomen, H, -CH₂SH, -CH₂SCH₂CH₂SH, 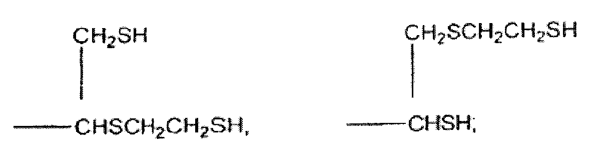 vorausgesetzt, dass R₁, R₂, R₃ und R₄ nicht gleichzeitig H oder ein Alkyl sind, oder dass, wenn irgendwelche drei von R₁, R₂, R₃ und R₄ H oder ein Alkyl sind, das andere Radikal aus einem der folgenden Radikalen besteht: 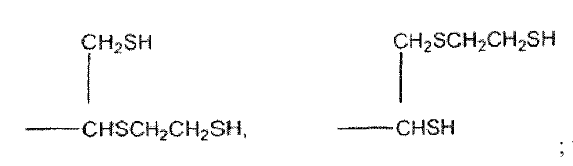 und
*Formel (2): (HSCH₂)₄₋ₘC(CH₂SCH₂CH₂SH)ₘ (2)
wobei m eine ganze Zahl von 1 bis 3 bedeutet;
und
- mindestens teilweise Eintauchen des Substrats in die Farbstofflösung für eine Zeit, die ausreicht, um das effektive Anfärben des Substrats zu erlauben.

2. Verfahren nach dem vorhergehenden Anspruch, wobei das Substrat einen Brechungsindex von mindestens 1,67, vorzugsweise von 1,67 bis 1,79 und noch bevorzugter von 1,71 bis 1,79 hat.

3. Verfahren nach einem der vorhergehenden Ansprüche, wobei die Episulfidgruppe die Struktur der Formel (3) hat: 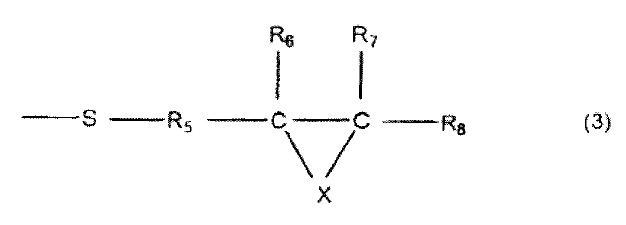 wobei R₅ eine Kohlenwasserstoffgruppe mit 1 bis 10 Kohlenstoffatomen repräsentiert, R₆, R₇ und R₈ jeweils ein Wasserstoffatom oder eine Kohlenwasserstoffgruppe mit 1 bis 10 Kohlenstoffatomen repräsentiert, X S oder O repräsentiert, unter der Bedingung, dass in dem Molekül die durchschnittliche Anzahl von S, der durch X repräsentiert wird, ungefähr 50% der Gesamtanzahl von S und O ist, die den dreigliedrigen Ring ausmachen, und vorzugsweise X S ist.

4. Verfahren nach einem der vorhergehenden Ansprüche, wobei die Episulfidgruppe die Struktur der Formel (4) hat: 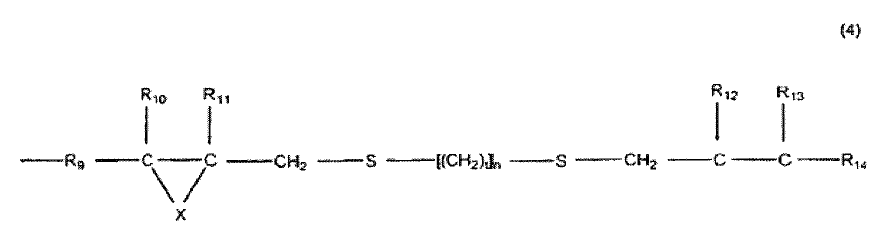 wobei R₉, R₁₀, R₁₁, R₁₂, R₁₃ und R₁₄ jeweils ein Wasserstoffatom oder eine Kohlenwasserstoffgruppe mit 1 bis 10 Kohlenstoffatomen repräsentiert, X S oder O repräsentiert, unter der Bedingung, dass in dem Molekül die durchschnittliche Anzahl von S, der durch X repräsentiert wird, ungefähr 50% der Gesamtanzahl von S und O in dem dreigliedrigen Ring ist, m eine ganze Zahl von 0 bis 6 repräsentiert und n eine ganze Zahl von 0 bis 4 repräsentiert,
und vorzugsweise X S ist.

5. Verfahren nach einem der vorhergehenden Ansprüche, wobei die polymerisierbare Zusammensetzung weiterhin ein oder mehr Polythiole der Formel R'(SH)ₙ umfasst, in welcher n' eine ganze Zahl von 2 bis 6 und R' eine organische Gruppe der Valenz gleich n' ist.

6. Verfahren nach einem der vorhergehenden Ansprüche, wobei der Träger ausgewählt ist aus der Gruppe umfassend gradkettige Dimerkaptanverbindungen, wie zum Beispiel Bis(2-merkaptoethyl)-sulfid, 1,2-[Bis(2-merkaptoethylthio)]-ethan; verzweigte aliphatische Polymerkaptanverbindungen, wie zum Beispiel 2-Merkaptomethyl-1,3-dimerkaptopropan, 2-Merkaptomethyl-1,4-dimerkaptobutan, 2-(2-Merkaptoethylthio)1,3-dimerkaptopropan, 1,2-Bis[(2-merkaptoethylthio)]-3-merkaptopropan, 1,1,1-Tris(merkaptomethyl)-propan und Tetrakismerkaptomethylmethan; 4-Merkaptomethyl-3,6-dithia-1,8-octandithiol und 2-Merkaptoethylsulfid, wobei der Träger bevorzugt Merkaptomethyl-3,6-dithia-1,8-octandithiol oder 2-Merkaptoethylsulfid ist und noch bevorzugter der Träger 4-Merkaptomethyl-3,6-dithia-1,8-octandithiol ist.

7. Verfahren nach einem der vorhergehenden Ansprüche, wobei das Lösungsmittel Wasser oder ein organisches Lösungsmittel ist und vorzugsweise das Lösungsmittel Wasser ist.

8. Verfahren nach einem der vorhergehenden Ansprüche, wobei die Farbstofflösung mindestens einen Farbstoff, ausgewählt aus der Gruppe von Azotyp-Farbstoffen, Chinophthalontyp-Farbstoffen und Anthrachinontyp-Farbstoffen enthält.

9. Verfahren nach einem der vorhergehenden Ansprüche, wobei die Farbstofflösung 0,05 Gew.-% bis 5 Gew.-%, vorzugsweise 0,05 Gew.-% bis 1 Gew.-% und noch bevorzugter 0,08 Gew.-% bis 0,5 Gew.-% des Trägers enthält.

10. Verfahren nach einem der vorhergehenden Ansprüche, wobei die Farbstofflösung einen Emulgator enthält, vorzugsweise ausgewählt aus der Gruppe von Aminsalzen oder Alkalisalzen von Carbon-, Sulfamin- oder Phosphorsäuren, Hydrogensalzen von Aminen, ethoxylierten oder propoxylierten Alkyl- oder Aryl-Phenolverbindungen.

11. Verfahren nach einem der vorhergehenden Ansprüche, wobei die Dauer des Eintauchens innerhalb des Bereichs von 3 bis 100 Minuten ist, vorzugsweise von 10 bis 90 Minuten und noch bevorzugter von 30 bis 96 Minuten.

12. Verfahren nach einem der vorhergehenden Ansprüche, wobei das Verfahren weiterhin das Erhitzen der Farbstofflösung bei einer Temperatur von 90 bis 100°C umfasst, vorzugsweise von 90 bis 96°C und noch bevorzugter von 93 bis 96°C während des Eintauchens.

## Revendications

1. Procédé pour teinter un substrat préparé par durcissement d'une composition polymérisable comprenant au moins un monomère contenant au moins un groupe épisulfure et facultativement au moins un groupe thiol, ledit procédé comprenant les étapes successives suivantes :
- fournir une solution de colorant comprenant au moins un colorant, ou précurseur de colorant, et au moins un support dans au moins un solvant, le support étant choisi parmi les composés représentés par les formules (1) et (2) suivantes : 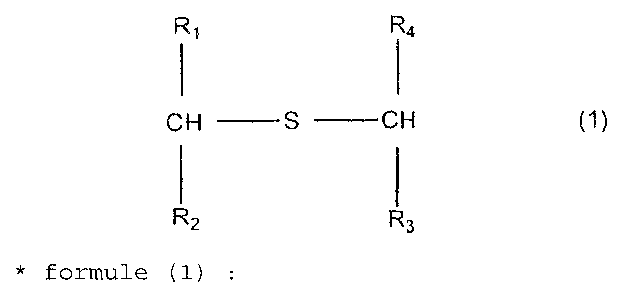 dans laquelle R₁, R₂, R₃ et R₄ sont choisis chacun dans le groupe consistant en les radicaux suivants : alkyle ayant 1 à 10 atomes de carbone, H, -CH₂SH, -CH₂SCH₂CH₂SH, 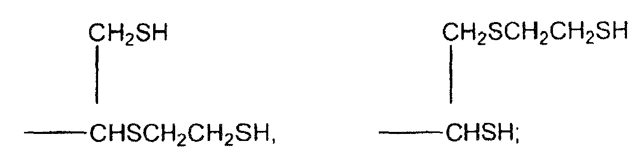 sous réserve que R₁, R₂, R₃ et R₄ ne représentent pas H ou un groupe alkyle simultanément, ou que, si trois quelconques de R₁, R₂, R₃ et R₄ représentent H ou un groupe alkyle, l'autre radical consiste en l'un des radicaux suivantes : 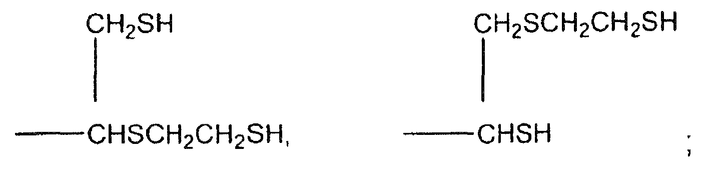 et
* formule (2) : (HSCH₂)₄₋ₘC(CH₂SCH₂CH₂SH)ₘ (2) dans laquelle m représente un nombre entier de 1 à 3 ;
et
- immerger au moins partiellement le substrat dans la solution de colorant pendant une durée suffisante pour permettre de teinter de manière effective le substrat.

2. Procédé suivant la revendication précédente, dans lequel le substrat a un indice de réfraction d'au moins 1,67, de préférence de 1,67 à 1,79 et de façon plus préférée de 1,71 à 1,79.

3. Procédé suivant l'une quelconque des revendications précédentes, dans lequel le groupe épisulfure a la structure de formule (3) : 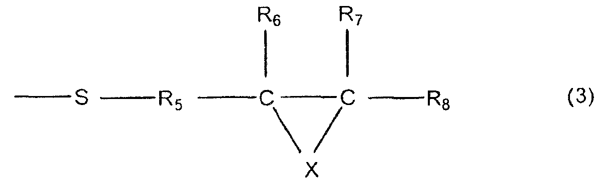 dans laquelle R₅ représente un groupe hydrocarboné ayant 1 à 10 atomes de carbone, R₆, R₇ et R₈ représentent chacun un atome d'hydrogène ou un groupe hydrocarboné ayant 1 à 10 atomes de carbone, X représente S ou O, sous réserve que, dans la molécule, le nombre moyen de S représenté par X soit égal à environ 50 % du nombre total de S et O présents dans le noyau à trois membres,
et de préférence X est S.

4. Procédé suivant l'une quelconque des revendications précédentes, dans lequel le groupe épisulfure a la structure de formule (4) : 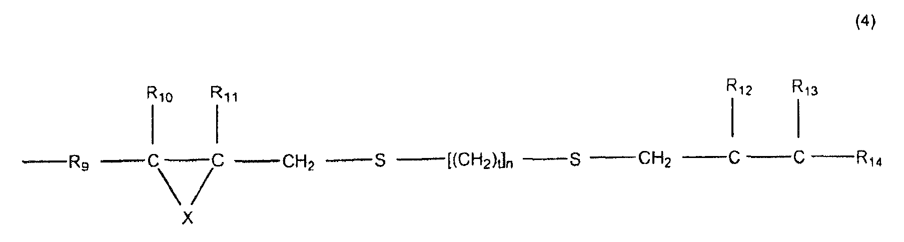 dans laquelle R₉, R₁₀, R₁₁, R₁₂, R₁₃ et R₁₄ représentent chacun un atome d'hydrogène ou un groupe hydrocarboné ayant 1 à 10 atomes de carbone, X représente S ou O, sous réserve que, dans la molécule, le nombre moyen de S représenté par X soit égal à environ 50 % du nombre total de S et O dans le noyau à trois membres, m représente un nombre entier de 0 à 6 et n représente un nombre entier de 0 à 4,
et de préférence X est S.

5. Procédé suivant l'une quelconque des revendications précédentes, dans lequel la composition polymérisable comprend en outre un ou plusieurs polythiols de formule R' (SH)_{n'}, dans laquelle n' est un nombre entier de 2 à 6 et R' est un groupe organique de valence égale à n'.

6. Procédé suivant l'une quelconque des revendications précédentes, dans lequel ledit support est choisi dans le groupe comprenant des composés dimercaptan à chaîne droite tels que le sulfure de bis(2-mercaptoéthyle), le 1,2-[bis(2-mercaptoéthylthio)]éthane ; des composés polymer-captan aliphatiques ramifiés tels que le 2-mercaptométhyl-1,3-dimercaptopropane, le 2-mercaptométhyl-1,4-dimercaptobutane, le 2-(2-mercaptoéthylthio)1,3-dimercaptopropane, le 1,2-bis[(2-mercaptoéthylthio)]-3-mercaptopropane, le 1,1,1-tris(mercaptomëthyl)propane et le tétrakismercaptométhylméthane ; le 4-mercaptométhyl-3,6-dithia-1,8-octanedithiol et le sulfure de 2-mercaptoéthyle, ledit support étant de préférence le mercaptométhyl-3,6-dithia-1,8-octanedithiol ou le sulfure de 2-mercaptoéthyle et le support étant de façon plus préférée le 4-mercaptométhyl-3,6-dithia-1,8-octanedithiol.

7. Procédé suivant l'une quelconque des revendications précédentes, dans lequel le solvant est l'eau ou un solvant organique, et le solvant est de préférence l'eau.

8. Procédé suivant l'une quelconque des revendications précédentes, dans lequel la solution de colorant contient un colorant choisi dans le groupe des colorants de type azoïque, des colorants du type quinophtalones et des colorants du type anthraquinone.

9. Procédé suivant l'une quelconque des revendications précédentes, dans lequel la solution de colorant contient 0,05 % à 5 %, de préférence 0,05 % à 1 %, et de façon plus préférée 0,08 à 0,5 % en poids du support.

10. Procédé suivant l'une quelconque des revendications précédentes, dans lequel la solution de colorant contient un émulsionnant, choisi de préférence dans le groupe des sels d'amines ou sels de métaux alcalins d'acides carboxyliques, sulfamiques ou phosphoriques, des sels d'acides d'amines, des composés alkyl- ou aryl-phénoliques éthoxylés ou propoxylés.

11. Procédé suivant l'une quelconque des revendications précédentes, dans lequel la durée d'immersion est comprise dans l'intervalle de 3 à 100 minutes, de préférence de 10 à 90 minutes, et de façon plus préférée de 30 à 96 minutes.

12. Procédé suivant l'une quelconque des revendications précédentes, ledit procédé comprenant en outre le chauffage de la solution de colorant à une température de 90 à 100°C, de préférence de 90 à 96°C, et de façon plus préférée de 93 à 96°C, au cours de l'immersion.
